# EUROPEAN PATENT APPLICATION

(11) **EP 1 696 319 A2**
(43) Date of publication of application: **30.08.2006**
(21) Application number: 06100769.6
(22) Date of filing: 24.01.2006
(51) Int. Cl.: G06F 9/44

(54) **End user data activation**

(30) Priority: 28.02.2005 US 657330 P; 11.07.2005 US 178845
(71) Applicant: Microsoft Corporation, Redmond WA 98052 (US)
(72) Inventor: Knight, Holly, Redmond, WA Washington 98052 (US); Iceva, Katica, Redmond, WA Washington 98052 (US); Seshadri, Praveen, Redmond, WA 98052 (US); Abileah, Shahaf, Redmond, WA 98052 (US)
(74) Representative: Grünecker, Kinkeldey, Stockmair & Schwanhäusser Anwaltssozietät

(57) **Abstract**

A system for creating data processing tasks comprises an end-user programming module that allows an end user to associate one or more end-user-defined actions to at least one available computing component. The system also includes a rules platform that provides a binding of the one or more end-user-defined actions with the available computing component such that an integrated end-user program is created using the available computing component. Methods of using the system are also provided.

## Description

### CROSS-REFERENCE TO RELATED APPLICATION

This is an application claiming benefit under 35 U.S.C. §119(e) of U.S. Provisional Patent Application Serial No. 60/657,330, entitled "END USER DATA ACTIVATION" which was filed February 28, 2005. The entirety of which is hereby incorporated by reference.

### BACKGROUND

Modem computing systems can have hundreds of software processes active at any one time in various states of execution. These processes can be background processes initiated by an operating system, monitor or service processes that are initialized at start time or upon launching an application, or applications themselves. Many, if not most, of these processes or features of these processes are beyond the ability of a user to control directly. Therefore, if functionality offered by these processes is to be accessed at all, such access usually must be accomplished by another software process.

The number of processes running on a computing system is generally a function of the amount of data the system must process and the number of tasks the system is called upon to perform. Generally, the least efficient parts of these computing duties are the ones that require human interaction. Additionally, a properly implemented computing process can typically perform complex and repetitive tasks more accurately than a human operator. Therefore, there is a need for systems and methods that can assist in reducing the need for human interaction during processing tasks.

Generally, in order to fully exploit functionality provided by computing processes, an end user must be a skilled computer programmer. Many available functions go unused by end users who are merely proficient at using a computer as opposed to being skilled at programming a computer. This is often because end users are often not even aware that some of the functionality that is built-in to a computing system even exists. Many of those same users would greatly benefit from an ability to access underlying functions of computing components. Current systems do not provide an ability for an end user to access functions of a computing system and assemble groups of those functions in ways that are tailored to needs of individual end users.

### SUMMARY

The following presents a simplified summary in order to provide a basic understanding and high-level survey. This summary is not an extensive overview. It is neither intended to identify key/critical elements nor to delineate scope. Its sole purpose is to present some concepts in a simplified form as a prelude to the more detailed description later presented. Additionally, section headings used herein are provided merely for convenience and should not be taken as limiting in any way.

An end-user programming module can be used to create end-user programs that can combine functionality from components in a computing system. These components can be pieces of code from software residing on the computing system such as operating system processes, background processes, daemons, and stand-alone applications, among others. Execution of an end-user programming module can occur automatically in response to some end-user-defined triggering event and can perform computing tasks defined by the end user without the intervention of the end user. Additionally or alternatively, execution of the end-user program can be in response to a command from the end user.

The end users can use a rules platform as a basis for creating components that perform tasks identified by the end users themselves. The end users can, by using the rules platform, define data processing tasks to be automatically performed upon the occurrence of a chosen event or manually performed upon a command from the end user. Performance of such tasks may be performed by one or more components of the computing system. The one or more components of the computing system can each contribute to a part of the overall processing of an end-user program.

The end-user program can provide custom functionality to already-existing components such as user applications. This functionality can be created by accessing the rules platform and associating tasks with various controls of the already-existing components such as elements of a graphical (or other) user interface. In this manner, end users can extend or modify functionality provided by standard components such as stand-alone applications.

The disclosed and described components and methods comprise one or more of the features hereinafter described and particularly pointed out in the claims. The following description and the annexed drawings set forth in detail certain specific illustrative components and methods. However, these components and methods are indicative of but a few of the various ways in which the disclosed components and methods can be employed. Specific implementations of the disclosed and described components and methods can include some, many, or all of such components and methods, as well as their equivalents. Variations of the specific implementations and examples presented herein will become apparent from the following detailed description when considered in conjunction with the drawings.

### BRIEF DESCRIPTION OF THE DRAWINGS

FIG. 1 is a system block diagram of an end-user programming system.

FIG. 2 is a system block diagram of an end-user programming module.

FIG. 3 is a system block diagram of an end-user processing system.

FIG. 4 is a system block diagram of an end-user programming system including remote components.

FIG. 5 is a system block diagram of an automatic end-user programming system.

FIG. 6 is a system block diagram of a secure end-user programming system.

FIG. 7 is a flow diagram of a general processing flow that can be used with various components disclosed and described herein.

FIG. 8 is a flow diagram of a general processing flow that can be used with various components disclosed and described herein.

FIG. 9 is a flow diagram of a general processing flow that can be used with various components disclosed and described herein.

FIG. 10 is a flow diagram of a general processing flow that can be used with various components disclosed and described herein.

FIG. 11 is a flow diagram of a general processing flow that can be used with various components disclosed and described herein.

FIG. 12 is a flow diagram of a general processing flow that can be used with various components disclosed and described herein.

FIG. 13 is a schematic diagram of a computing environment upon which various disclosed and described components and methods can be implemented.

FIG. 14 is a system block diagram of a network environment within which various disclosed and described components and methods can be used.

### DETAILED DESCRIPTION

As used in this application, the terms "component," "system," "module," and the like are intended to refer to a computer-related entity, such as hardware, software (for instance, in execution), and/or firmware. For example, a component can be a process running on a processor, a processor, an object, an executable, a program, and/or a computer. Also, both an application running on a server and the server can be components. One or more components can reside within a process and a component can be localized on one computer and/or distributed between two or more computers.

Disclosed components and methods are described with reference to the drawings, wherein like reference numerals are used to refer to like elements throughout. In the following description, for purposes of explanation, numerous specific details are set forth in order to provide a thorough understanding of the disclosed subject matter. It may be evident, however, that certain of these specific details can be omitted or combined with others in a specific implementation. In other instances, certain structures and devices are shown in block diagram form in order to facilitate description. Additionally, although specific examples set forth may use terminology that is consistent with client/server architectures or may even be examples of client/server implementations, skilled artisans will appreciate that the roles of client and server may be reversed, that the disclosed and described components and methods are not limited to client/server architectures and may be readily adapted for use in other architectures, specifically including peer-to-peer (P2P) architectures, without departing from the spirit or scope of the disclosed and described components and methods. Further, it should be noted that although specific examples presented herein include or reference specific components, an implementation of the components and methods disclosed and described herein is not necessarily limited to those specific components and can be employed in other contexts as well.

It should also be appreciated that although specific examples presented may describe or depict systems or methods that are based upon components of personal computers, the use of components and methods disclosed and described herein is not limited to that domain. For example, the disclosed and described components and methods can be used in a distributed or network computing environment. Additionally or alternatively, the disclosed and described components and methods can be used on a single server accessed by multiple clients. Those of ordinary skill in the art will readily recognize that the disclosed and described components and methods can be used to create other components and execute other methods on a wide variety of computing devices.

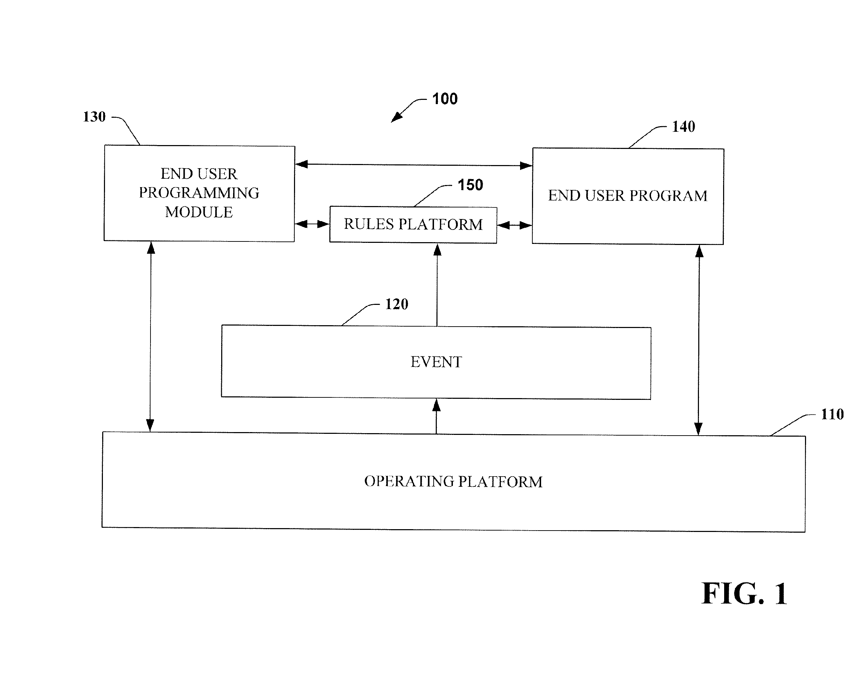

FIG. 1 is a system block diagram of an end-user programming system 100. The end-user programming system 100 can be used to create a computing component that can perform computing tasks as described or defined by an end user. The computing component can perform tasks that could otherwise be performed manually by an end user through the entry of one or more commands at a user interface. Additionally or alternatively, the computing component can perform tasks through use of computing functionality that is not ordinarily directly accessible to an end user.

The end-user programming system 100 includes an operating platform 110 that provides a processing environment for the system 100. In this context, the operating platform 110 can include hardware components, software components, or both hardware and software components. Among those implementations specifically contemplated for use as the operating platform 110 are software-based operating systems, computing devices with operating systems hosted in firmware, and embedded systems.

Various occurrences in a computing environment can be treated as significant and used to generate an event. Such occurrences can include file creation, modification, and deletion, receipt of an email message, and launching or exiting an application, among others. An event 120 can be created by the operating platform 110 to signify that some occurrence has happened in the computing environment. The event 120 can serve as an indicator that a processing task can or should be performed. The form of the event 120 can be a message passed between or among computing components, a processing flag, or another suitable indicator. Specifically, the form of the event 120 is highly implementation-dependent and can vary according to features provided by the operating platform 110, among other things.

An end-user programming ("EUP") module 130 can provide a component that can be operated by an end user to define an action, such as an end-user program 140, to be taken automatically upon the occurrence of an event or alternately upon invocation of a command from an end user. An end user can access the EUP module 130 to create an end-user program that comprises a group of data management or information processing tasks selected from among available functions of a computing system. For example, an end-user program can be created to detect when an email message arrives from a specified user, check that message for presence of any attached files, and save any attached files to a specified directory. These actions can be performed automatically without active participation of an end user beyond initially creating the end user program.

The EUP module 130 can include a user interface that allows a user to identify or designate a specific action that can be performed by a computing component. This user interface can be a graphical user interface (GUI), a command line interface (CLI), a text-based interface, or a web-based interface, among others. The user interface can also be a type of end-user programming environment similar to an integrated development environment used by software developers to write, compile, and test software code. Specifically, the user interface can be a graphical development environment that allows a user to select graphical elements that represent various program functions or data objects and assemble those elements into an end user program.

It should be noted that the end-user program 140 can be a single task or can be a group of tasks to be performed. The EUP module 130 can provide an interface to functions included in a computing system that can be operated manually or automatically, or previously could only be accessed by other software components such as, but not limited to, an operating system, a service component, an application, or another computing component. The end user can use the interface of the EUP module 130 to build a computing component that uses these functions of the computing system to accomplish a wide variety of computing tasks.

One specific example includes email and file organization. An end user can define an action to take upon receipt of an email message that has an attached file. For instance, the end user can specify that when an email message is received from a certain domain (or user at that domain) that includes a file attachment, the attached file should be saved into a specific directory, scanned for viruses, and then opened using a specific program. To define this action, the end user can access a list of specific functions available on the computing system. In this example, the functions involved include detection of new email messages, file saving, virus scanning, and file opening. The end user can use the EUP module 130 to aggregate these functions into a single end-user-defined program and specify rules that are triggered by events that will cause the aggregated functions to occur. Here, a first event can be triggered by receipt of the email message. The end-user-defined program can process rules to determine whether the email message is from a predefined sender and if so, whether the email message includes a file attachment. If yes on both conditions of the rule, the user-defined module can save the attached file to a predetermined directory. The end-user-defined module can then activate a virus scanning program to detect any virii in the saved file. If the saved file does not include any virii detected during scanning, the user-defined module can launch an application, such as a word processor, a photo editing program, or some other suitable application, and cause the opened application to open the saved file. All these steps can be automatically performed without intervention from the end user.

Processing of rules as described in the above example can be accomplished using a rules platform 150 that provides the ability for an end user to define conditions or scenarios that are keyed to certain processing tasks. The rules platform 150 can include logic that allows an end user to define one or more actions that can be taken automatically or upon a command from an end user. These rules can be attached to or incorporated with programs or agents that can be run using elements of a user interface such as clicking (or right-clicking, etc.) on buttons, links, menus, or other interface elements. Additionally or alternatively, icons for end-user-defined modules or even end-user-defined stand-alone applications can be created and run by double-clicking the icon or otherwise activating the executable code associated with the icon. Such actions can be added to preexisting components that have developer-designed actions or functions or can be created as stand-alone, end-user-created components. The rules platform can use reflection against bindings and system-installed or application-installed elements to create and execute end-user-defined components. In this context, and elsewhere as required or appropriate, bindings can be understood as linkages or mappings between a representation of a function or data object, such as a graphical element in a user interface that represents a function or a file, and underlying code that actually performs the function when in execution or comprises the data object.

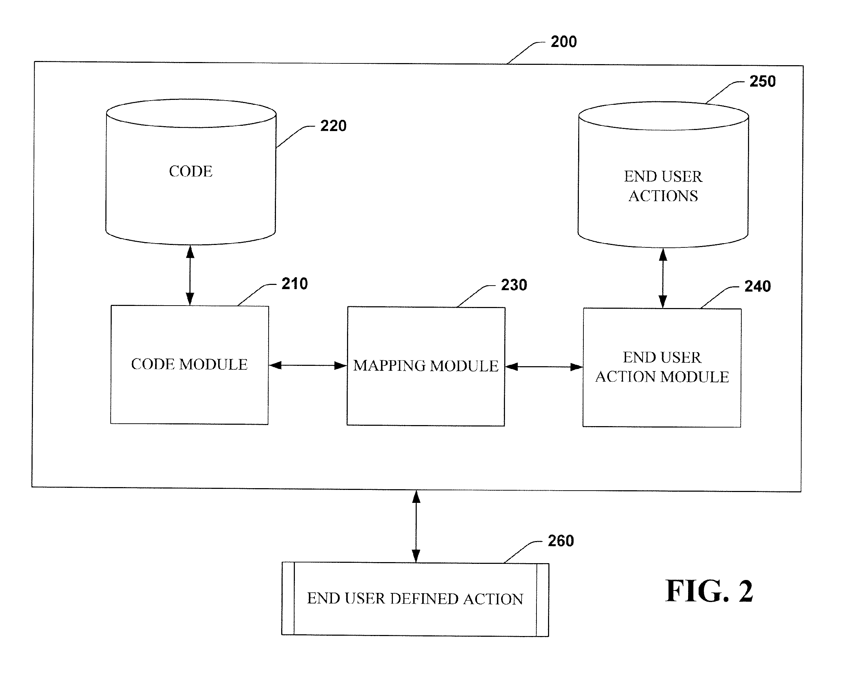

FIG. 2 is a system block diagram of an end-user programming module 200. The end-user programming module can be used as part of an overall user interface that allows an end user to define and create an end-user-defined program component. Specifically, the end-user programming module 200 can be used as the end-user programming module 130 of FIG. 1. An end user can access the end-user programming module 200 to discover functions or data objects that are available for use and to assemble those functions or data objects into end-user programs.

The end-user programming module 200 includes a code module 210. The code module 210 can access a code data store 220. The code data store 220 includes underlying software code including functions and data objects that are available for use as part of an end-user-defined action component. It should be noted that in certain implementations, such as an implementation that uses reflection on bindings, techniques provided by a reflection scheme can be used to discover available code dynamically as an alternative to, or in addition to, maintenance of a set of descriptors in the code data store 220.

The code module 210 can provide a summary description of each available piece of code or data object, such as any of the code in the code data store 220, in a human-readable format. Additionally or alternatively, the code module 210 can provide machine-readable descriptors or identifiers of the code in the code data store 220 to a mapping module 230. The mapping module 230 can map or bind code from the code data store 220 to one or more end-user actions. In this manner, an appropriate computing component that provides some functionality can be matched with a description of an action that an end user desires to be performed.

A end-user action module 240 can access an end-user action that can be described, defined, or designated by an end user and can provide an appropriate descriptor for that end-user action in a form that the mapping module 230 can use to match or bind the end-user action to code provided by the code module 210. For example, a coded descriptor can be associated with an end-user action that is stored in an end-user action data store 250. This end-user action can be, for example, a command to "Save file X in directory Y" or some other appropriate action. A corresponding descriptor of code in the code data store 220 can be matched to the end-user action by the mapping module 230 to map an end-user action to some piece of code. One or more of such matched end-user actions and pieces of code can be used as part of an end-user-defined action module 260 or a completed end-user program.

A possible example of one mode of operation of the end-user programming module 200 follows. A user can access the end-user programming module 200 through a user interface such as a GUI, a CLI, or any other suitable computer-human interface. The end user can use components of the user interface to define one or more end-user actions. Additionally or alternatively, the user can select one or more end-user actions from among a set of predefined end-user actions that are stored in the end-user actions data store 250.

The end-user action module 240 provides or accesses a descriptor that is associated with the end-user action that was defined or selected by the end user. This descriptor can provide a machine-interpretable description of the functionality desired by the end user. The end-user action module 240 can provide that descriptor to the mapping module 230.

The mapping module 230 can provide the descriptor to the code module 210. The code module 210 uses the descriptor to locate a piece of code that has a corresponding descriptor and that provides the processing function desired by the end user. The code module 210, upon locating such a piece of code in the code data store 220, provides an identifier of the located piece of code to the mapping module 230. The mapping module 230 then matches or binds the end-user action with the piece of code to create the user-defined action module 260.

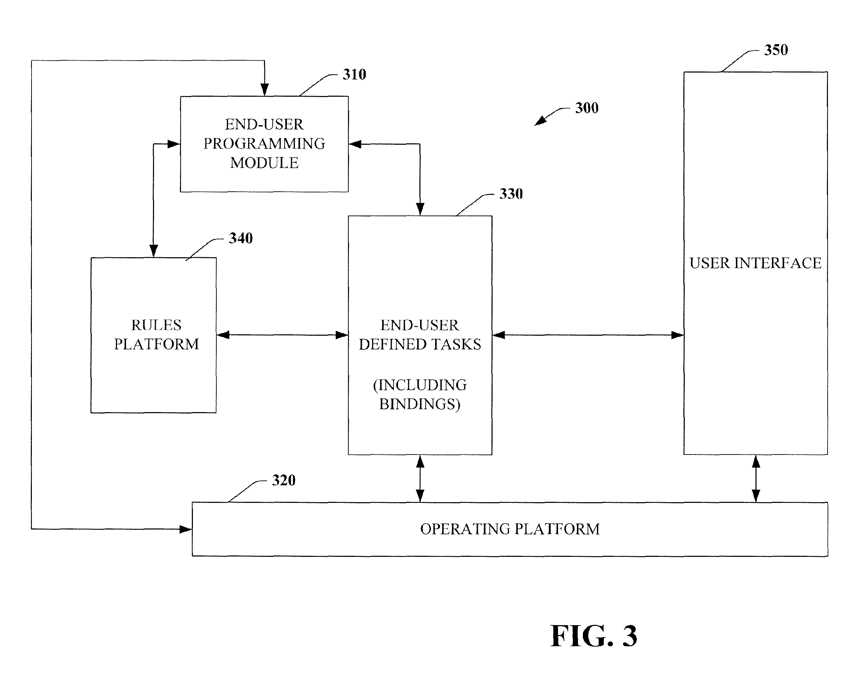

FIG. 3 is a system block diagram of an end-user processing system 300. The system 300 includes an end-user programming module 310 that provides access to the system for a human user. The end-user programming module 310 is coupled to an operating platform 320 that can include both hardware and software components. The end-user programming module 310 also accesses a set of end-user-defined tasks 330 and a rules platform 340. The end-user-defined tasks 330 include bindings of tasks to logic of an action. A user interface 350 provides a front-end interface between the system 300 and a human end user and includes control elements for components.

To perform some of the described tasks, the end-user processing system 300 can employ a rules algebra. Although a specific rules algebra is described herein, a variant of this rules algebra or a totally different rules algebra may be substituted. It should also be noted that the disclosed and described rules algebra can be substituted with another suitable component.

A contemplated rules algebra can have five basic terms: a property, a filter, an event, an action, and a set. A property can describe attributes of an end user data type. The end user can use properties to describe filters and actions. A filter can define a Boolean function that can be used as a processing screen applied to data types. The filter can return true or false values. An event can define an occurrence of interest. Events can be associated with one or more data types. An action is a side-effecting method of a data type that performs some processing function. An action can take zero or more input parameters. A set can be a collection of data types.

Properties, filters, and actions can be constructed using rules. Within each rule, a variety of conditions can be used, including comparing a property with an expression, matching a target object with a filter, and determining whether a target object is within a set. Constructed items such as these can be used as parts of end-user programs. For example, a derived set can be a complete end-user program or can be combined (union) with another set to create a more complex end-user program. A set can be associated with an action to create a batch. A batch can define a set-oriented task to perform. Batches can be manually executed or scheduled for execution at a predetermined time or on a schedule. An agent can be created from an event and an action. An agent defines an action to be performed upon the occurrence of some event.

To support use of a rules algebra, a file system can be used that can store objects or data types in a manner that directly supports queries on those objects or data types. Metadata about those objects or data types can be stored along with the objects themselves and used to support queries and actions. A variety of file systems can be used to store these objects or data types. The file system can provide a physical organization model that is based on item-level properties and cross-item relationships. With such a file system, objects or data types can be organized dynamically on the bases of executing rules designed to select or aggregate objects or data types in various ways.

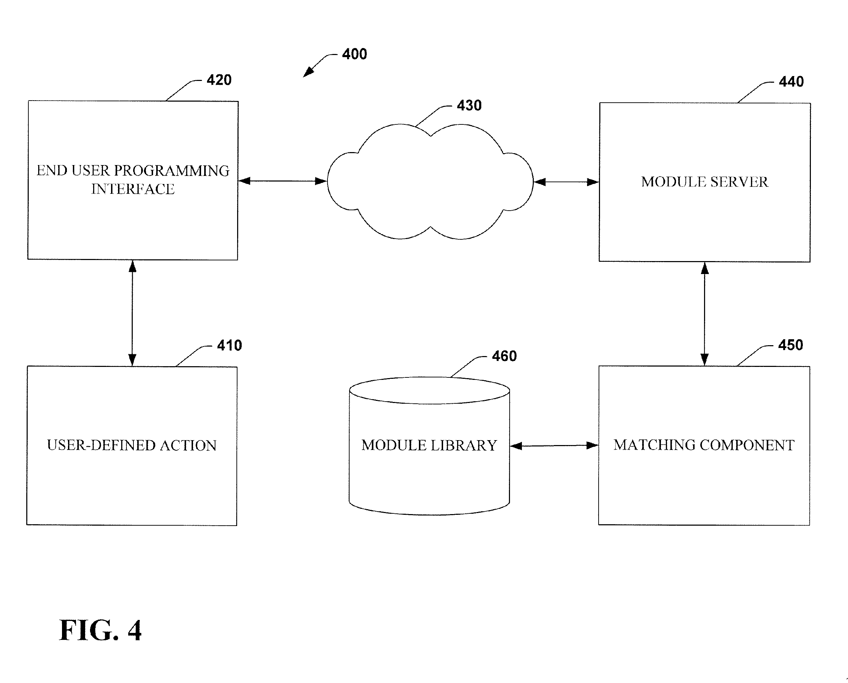

FIG. 4 is a system block diagram of an end-user programming system 400. The end-user programming system 400 can be used to obtain preexisting end-user programming modules from a remote location. Specifically, the end-user programming modules that can be obtained match one or more user-defined actions on a local computing system.

The end-user programming system 400 includes a user-defined action 410. The user-defined action 410 can be a description of some computing task that an end user desires to be performed this computing task to be formed mainly, for example, upon a specific command from a user for can be keyed to execute in response to some event wore according to some schedule. Additionally, the user-defined action 410 can include or be associated with a specific identifier or a descriptor that allows for other components to determine what function or functions are requested by the user-defined action.

An end-user programming interface 420 can provide a means by which a user can designate or define which actions to use. Descriptions of designated or defined actions can be sent by the end-user programming interface 420 over a network 430 to a module server 440. The module server 440 can serve as a host to provide previously constructed end-user programming modules to users who desire to obtain additional functionality that serves their needs.

The module server 440 can relay the received description of the end-user-defined action 410 to a matching component 450. The matching component 450 can use the relayed description to search a module library 460 to locate one or more end-user programming modules that can provide the functionality that the end user requires. The matching component can then send copies of matching end-user programming modules to the module server for transmission to the end-user programming interface 420 over the network 430. Additionally or alternatively, the module server 440 can provide a list of available end-user programming modules to the end-user programming interface 420 and await a command to transmit one of the end-user programming modules on the list. Those of ordinary skill in the art will recognize that the module server 440 can be implemented as a web server or a file transfer protocol (FTP) server, among other types. Additionally or alternatively, module searches and downloads can be provided as web services.

Various components that are disclosed and described herein, for example in connection with identification or matching tasks, can employ various artificial intelligence-based schemes for carrying out various aspects thereof For example, matching of an end-user-defined action with an end-user programming module can be carried out by a neural network, an expert system, a rules-based processing component, or a support vector machine (SVM).

A classifier is a function that maps an input attribute vector, *X* = (*x*₁, *x*₂, *x*₃, *x*₄, ... *x*ₙ), to a confidence that the input belongs to a class, that is, *f*(*X*) = *confidence*(*class*)*.* Such a classification can employ a probabilistic and/or statistical-based analysis (for example, factoring into the analysis utilities and costs) to prognose or infer an action that a user desires to be automatically performed. In the case of an end-user programming module, patterns of events can be classified to determine whether to take one or more specified actions. Other patter-matching tasks can also be employed as will be evident to an artisan of ordinary skill upon reading this disclosure.

An SVM is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, for example, naive Bayes, Bayesian networks, decision trees, and probabilistic classification models providing different patterns of independence can be employed. Classification as used herein also includes statistical regression that is utilized to develop models of priority.

As will be readily appreciated from the subject specification, components disclosed or described herein can employ classifiers that are explicitly trained (for example, by a generic training data) as well as implicitly trained (for example, by observing user behavior, receiving extrinsic information). For example, SVMs are configured by a learning or training phase within a classifier constructor and feature selection module. Thus, the classifier(s) can be used to automatically perform a number of functions including but not limited to determining whether a device should be sent data.

It should be appreciated that the components and methods described provide general frameworks for end-user programming. Among the uses for such end-user programming components and methods are creation of end-user-defined automated tasks. Also possible is an ability to make similar types of changes in a batch fashion to a large number of files, for example, by changing resolution of each of a group of image files. Further, by combining more complex modules, such as aggregated modules that perform multiple tasks along with artificial intelligence components, sophisticated intelligent behavior is possible.

One possible mode of operation of the end-user programming system 400 follows. An end user accesses the end-user programming interface 420 and defines one or more actions that the end user desires to have performed on his computer. The end-user programming interface 410 creates the end-user-defined action 410 from the definition provided by the end user and also creates a suitable descriptor of that end-user-defined action. The end-user programming interface 420 then sends the descriptor over the network 430 to the module server 440. The module server 440 sends the descriptor to the matching component 450. The matching component 450 searches the module library 460 to locate a module that will provide the functionality specified by the user. The matching component then provides a list of located modules to the module server 450.

The module server 450 sends the list of located modules over the network 430 to the end-user programming interface 420. The end user selects one or more modules from the list and sends his selections over the network 430 to the module server 450. The selected modules are then sent over the network 430 to the end-user programming interface 420 and installed on the machine of the end user.

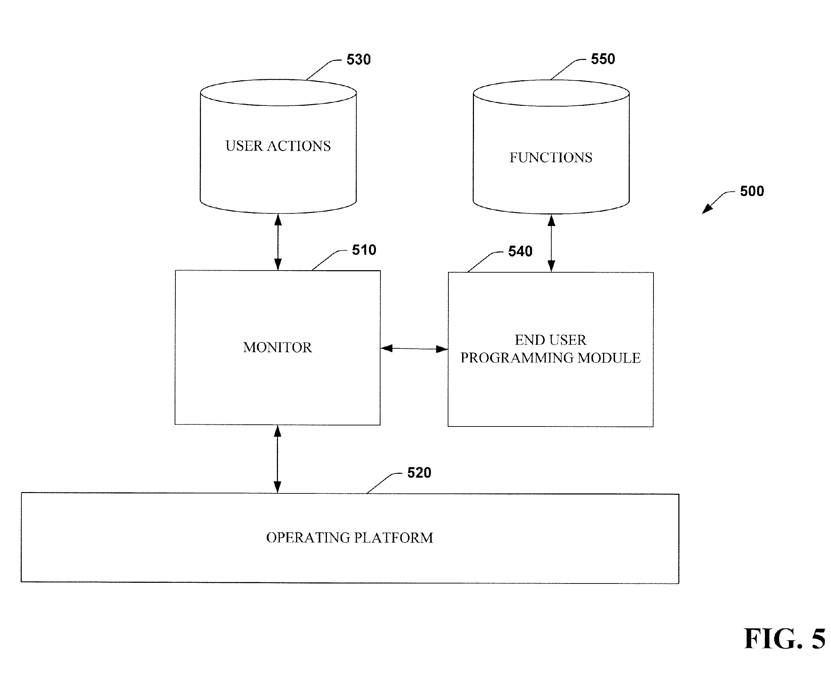

FIG. 5 is a system block diagram of an automatic end-user programming system 500. The automatic end-user programming system 500 can be used to automatically create functional program modules that are based upon how the end user actually interacts with the computer while performing various computing tasks. Specifically, the automatic end-user programming system 500 can monitor and analyze user commands and actions on the computer to identify patterns of commonly-performed tasks that can be automated by creating an end-user programming module.

The automatic end-user programming system 500 includes a monitor 510. The monitor 510 can track end-user actions, such as, for example in a GUI environment, mouse clicks and specific actions initiated by those mouse clicks. The monitor 510 operates on, and interacts with, an operating platform 520. As those of ordinary skill in the art will readily recognize, certain end-user actions performed in an interface environment such as a GUI initiate actions that are actually performed by an operating environment such as the operating platform 520. In addition to the ability to track end user operations and actions, the monitor 510 can track actions taken by the operating platform 520 on behalf of, or in response to a command of, an end user.

The monitor 510 can store the detected actions in an action data store 530. The action data store 530 can be a collection of action objects, a list of end-user actions, or another suitable form that preserves a record of how the end user has interacted with the computer. The monitor can analyze these end user actions to try to determine whether a pattern of actions is emerging or has emerged. For example, an end user can be working with a large batch of photographs by opening each individual image file in a photo editing program and inserting a copyright notice into the image file. The monitor 510 can determine that the end user is repeating this task and send information about the repeated task to an end-user programming module 540.

The end-user programming module 540 can use this information about the repeated task (or series of tasks) to create an end-user-defined action and locate functions in a function data store 550 that can be used to perform the task. The located functions can be used to create an end-user program that can automatically perform the tasks identified by the monitor 510. It is possible that these actions, up to an including creation of the end-user program, can be performed as background computing tasks without intervention from the end user. When the end-user program has been created, the system can prompt the end user to determine whether the end user wants the computer to automatically complete the tasks being performed. In the case of the photograph copyright notice provided above, the system can ask the end user whether the computer should automatically insert copyright notices in the remaining files of the working directory.

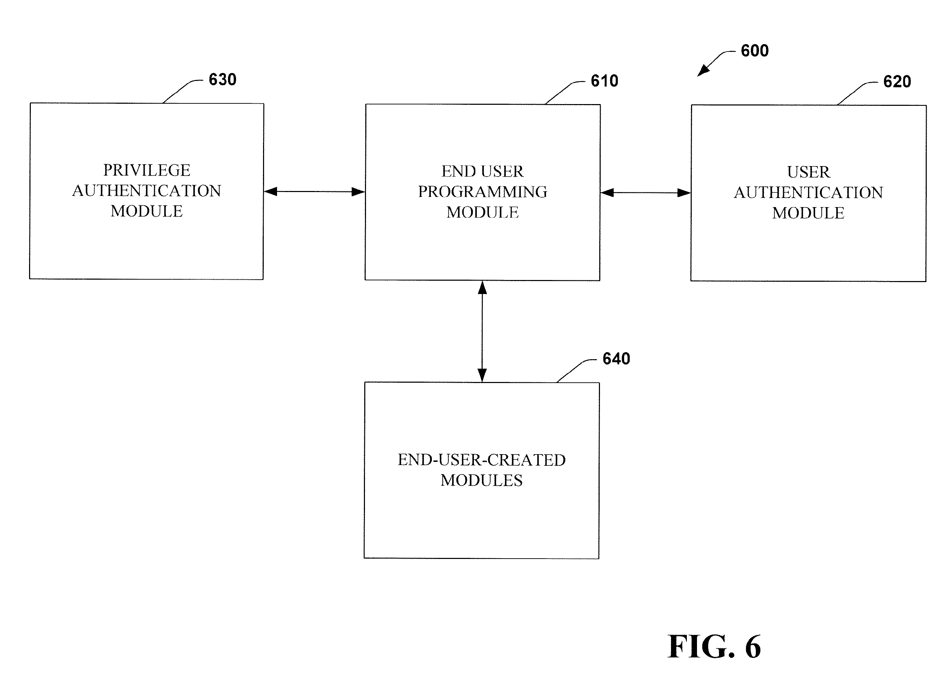

FIG. 6 is a system block diagram of a secure end-user programming system 600. The secure end-user programming system 600 can be used to provide controlled access to an end-user programming module. Additionally, the end-user programs created by the end-user programming system 600 can be checked to ensure that such programs are not run with escalated privileges.

The secure end-user programming system 600 includes an end-user programming module 610. The end-user programming module 610 can perform all the functions previously disclosed and described in conjunction with other end-user programming components referenced in other figures. A user authentication module 620 can control access to the end-user programming module 610 to limit access to only authorized end users.

A variety of mechanisms and approaches can be used to implement the user authentication module 620. The user authentication module 620 can take a wide variety of forms according to specific implementation needs or design choices. Specifically, the user authentication module 620 can use a security scheme that operates according to one or more security paradigms of who you are, what you know, or what you have.

Components that can be used in implementations based upon the security paradigm of "who you are" include a variety of biometric-based devices, such as fingerprint scanners and retina scanners, among others. For implementations using the "what you know paradigm," a user name and password authentication system can be employed. In the category of implementations based upon "what you have" are systems that use security tokens and proximity detectors, such as radio frequency identification (RFID) tag-based systems. According to a desired level of security, one or more of the foregoing systems can be combined as part of the user authentication module 620.

The user authentication module 620 can serve as a gatekeeper to the end-user programming module 610. In order for a user to be able to access and use the end-user programming module 610, the end user must verify his authority to use the system by appropriately responding to security challenges issued by the user authentication module 620. According to a specific implementation, such responses can be provided through a specified user interface or through another appropriate means.

A privilege authentication module 630 can monitor execution of end-user-created program modules 640. Specifically, the privilege authentication module 630 can check to see if the end-user-created modules 640 are attempting, during execution, to access components or perform tasks that are reserved for other processes or are otherwise not permitted. For example, an end-user-created module, such as one of the end-user-created modules 640 can attempt, as part of its execution, to modify a set of files that belong to another end user. The privilege authentication module 630 can check to see if the end user running the end-user-created module has sufficient access credentials on the computing system to access the files of the other end user. If not, the privilege authentication module 630 can interrupt or halt execution of the end-user-created module. Additionally, the privilege authentication module 630 can perform various related tasks such as logging events such as suspected privilege escalation attacks and prompting end users with warnings.

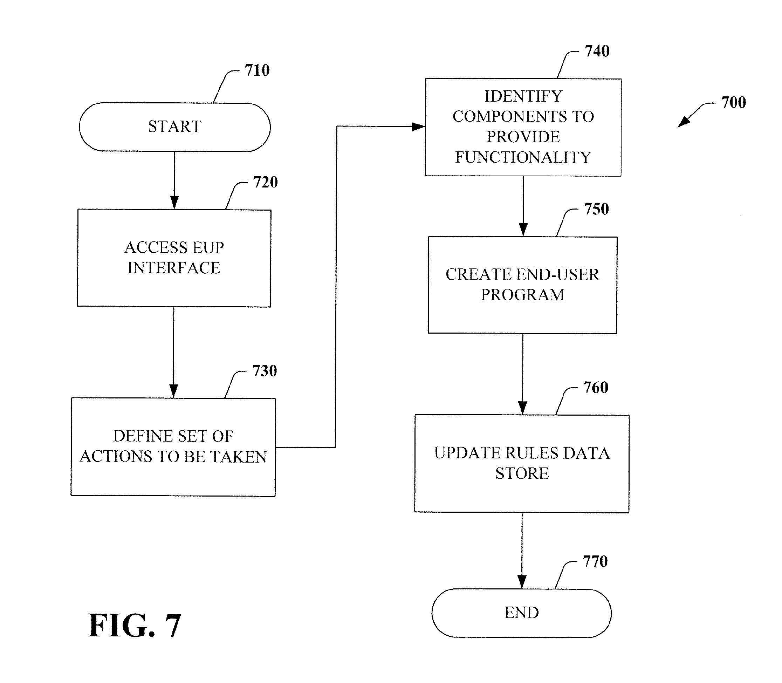

With reference to FIGs. 7 - 12, flowcharts in accordance with various methods or procedures are presented. While, for purposes of simplicity of explanation, the one or more methodologies shown herein, for example, in the form of a flow chart, are shown and described as a series of acts, it is to be understood and appreciated that neither the illustrated and described methods and procedures nor any components with which such methods or procedures can be used are necessarily limited by the order of acts, as some acts may occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology or procedure.

FIG. 7 is a flow diagram of a general processing flow 700 that can be used with various components disclosed and described above in conjunction with other figures. The general processing flow 700 is depicted from the perspective of an end user and can be used to create end-user-defined program modules that can supplement preexisting computing functionality. Other uses are also possible.

Processing of the general processing flow 700 begins at START block 710 and continues to process block 720 where the end-user programming interface is accessed by an end user. The end-user programming interface can be one of the end-user programming interfaces or modules disclosed or described above in conjunction with other figures. The end user defines a set of actions to be taken at process block 730. These actions can be created from scratch or selected from a list of available actions that are supported by the computing system in operation by the end user.

At process block 740, one or more components that provide desired functionality are identified. These components can be stand-alone programs, background processes, features of programs, scripts, or some suitable executable component. At process block 750, an integrated end-user program is created. The rule base is updated at process block 760. Processing concludes at END block 770.

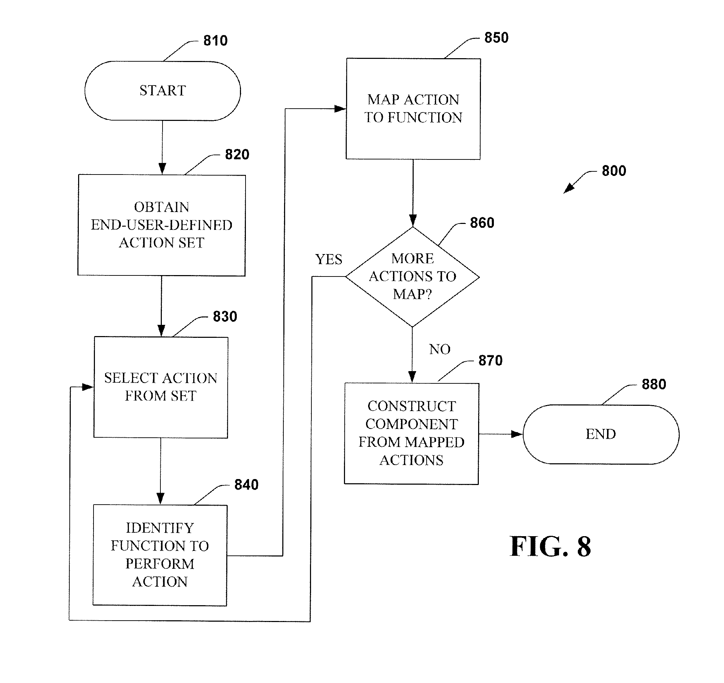

FIG. 8 is a flow diagram of a general processing flow 800 that can be used with various components disclosed and described above in conjunction with other figures. The general processing flow 800 is depicted from the perspective of an end-user programming system and can be used to create end-user-defined program modules having multiple components. Other uses are also possible.

Processing of the general processing flow 800 begins at START block 810 and continues to process block 820. At process block 820, an end-user-defined action set is obtained. This set can include multiple actions that the end user has grouped together and can order in some desired fashion. At process block 830, an action is selected from the set of end-user-defined actions. Processing continues to process block 840 where a function that can perform the computing task described by the end-user-defined action is identified. Such identification can be on the basis of a predefined association or matching between available actions and functions, by using a descriptive code, or through some other suitable approach.

At process block 850, the selected action is mapped to the identified function. At decision block 860 a determination is made whether any end-user-defined actions remain in the set that was obtained at process block 820. If that determination is no, processing continues to process block 870 where an end-user program module is constructed from the mapped function(s). If the determination is yes, processing returns to process block 830 where the next end-user-defined action is selected from the set. Processing from process block 870 terminates at END block 880.

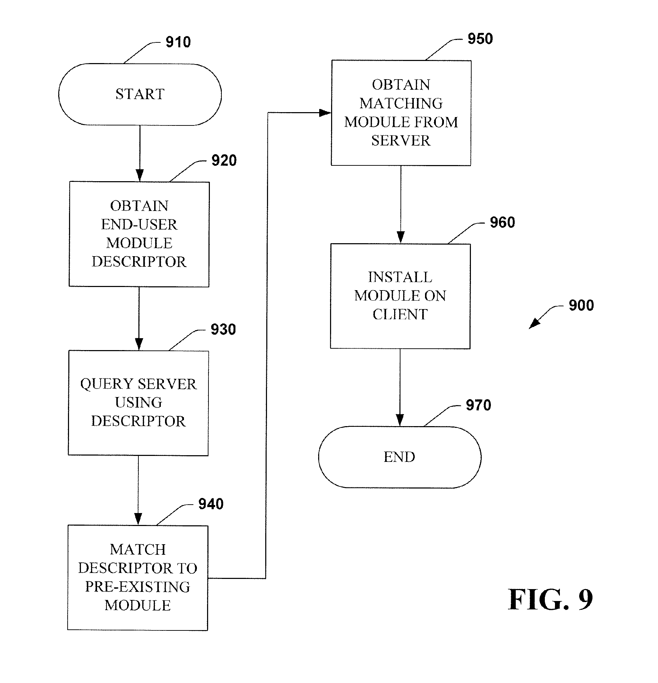

FIG. 9 is a flow diagram of a general processing flow 900 that can be used with various components disclosed and described above in conjunction with other figures. The general processing flow 900 can be used to locate and obtain previously created end-user-defined program modules that provide functionality required by a user. Other uses for this general processing flow are also possible.

Processing of the general processing flow 900 begins at START block 910 and continues to process block 920 where a descriptor of an end-user program module is obtained. This descriptor can be a code that describes functionality of the desired end-user program module, can be a predefined name, or can be some other type of descriptor. Processing continues to process block 930 where a server is queried using the descriptor. At process block 940, the descriptor is matched to a preexisting program module. This match does not have to be an exact match but rather can be a best-fit or close approximation of the desired module. Even close approximations can be helpful as such approximations can cut down on user development time by providing a framework that can be modified to create the exact desired module rather than having to construct a new module from scratch.

At process block 950, the matching module is obtained from the server. That module is installed on the client at process block 960. Once installed, the module can be modified by the end user as desired or can be used as-is. Processing of the general processing flow 900 terminates at END block 970.

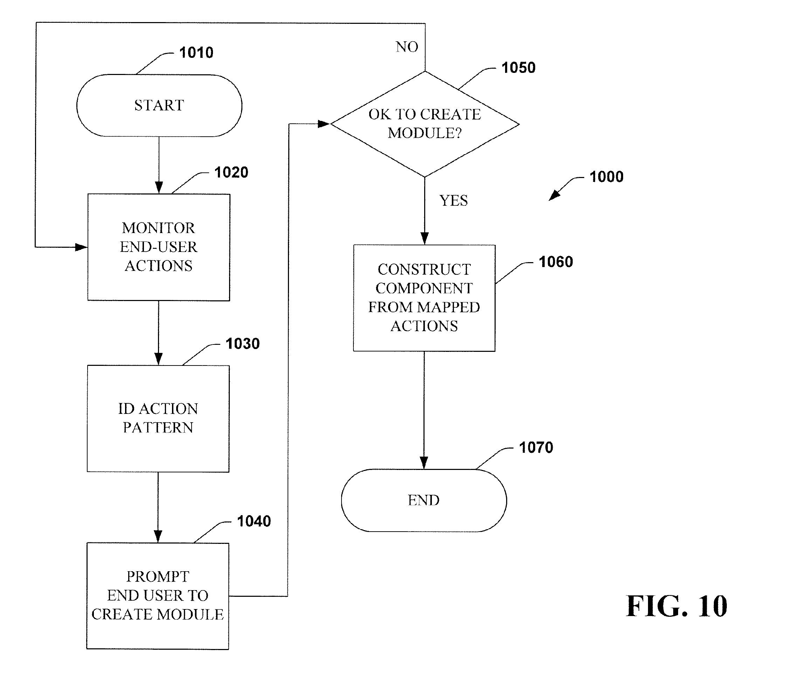

FIG. 10 is a flow diagram of a general processing flow 1000 that can be used with various components disclosed and described above in conjunction with other figures. The general processing flow 1000 can be used to automatically create end-user-defined program modules that can supplement preexisting computing functionality. Other uses are also possible.

Processing begins at START block 1010 and continues to process block 1020 where end user actions, as an end-user operates a computer, are monitored. At process block 1030, a pattern of operation of the computer is identified. Processing continues to process block 1040 where a prompt is created to obtain permission from an end-user to create a program module based upon the monitored actions of the end user.

At decision block 1050, a determination is made whether the end user has authorized the creation of the end-user program module. If yes, processing continues to process block 1060 where the end-user program module is created. If no, processing returns to process block 1020 where the actions of the end user are monitored. Processing from process block 1060 concludes at END block 1070.

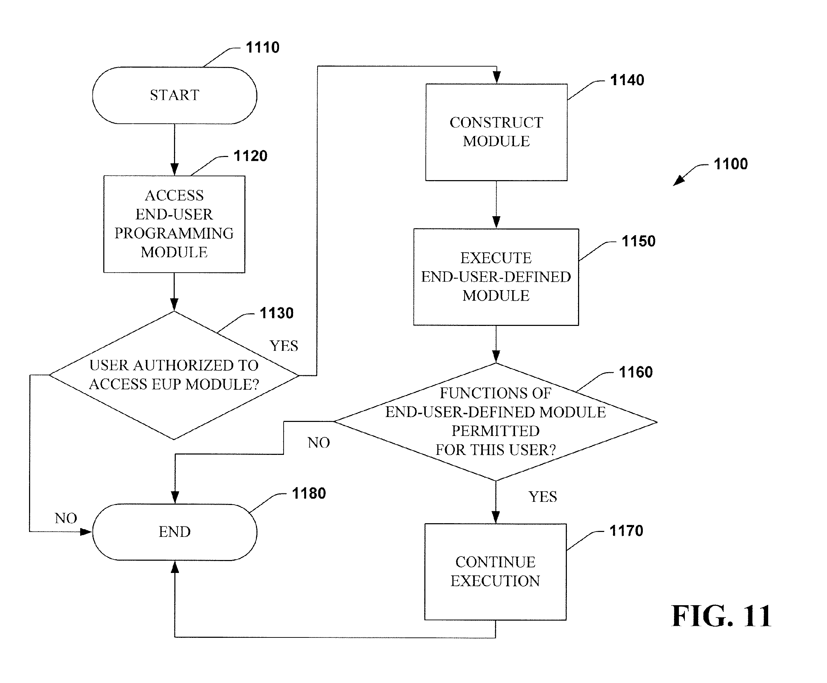

FIG. 11 is a flow diagram of a general processing flow 1100 that can be used with various components disclosed and described above in conjunction with other figures. The general processing flow 1100 can be used to limit access to use or create end-user-defined program modules that can supplement preexisting computing functionality only to end users who have previously been authorized to do so. Other uses are also possible.

Processing begins at START block 1110 and continues to process block 1120. At process block 1120, access to an end-user program module occurs. Processing continues to decision block 1130 where a determination is made whether the end user accessing the end-user program module is authorized to do so. If yes, processing continues to process block 1140 where the end user constructs a program module.

Processing from process block 1140 continues to process block 1150 where the created end-user program module is executed. At decision block 1160, a determination is made whether the functions to be performed by the end-user program module can properly be performed by the end user invoking execution of the module. If yes, execution of the end-user program module is allowed to proceed at process block 1170. Processing then terminates at END block 1180. Similarly, if a negative determination is made at either decision block 1130 or 1160, processing concludes at END block 1180.

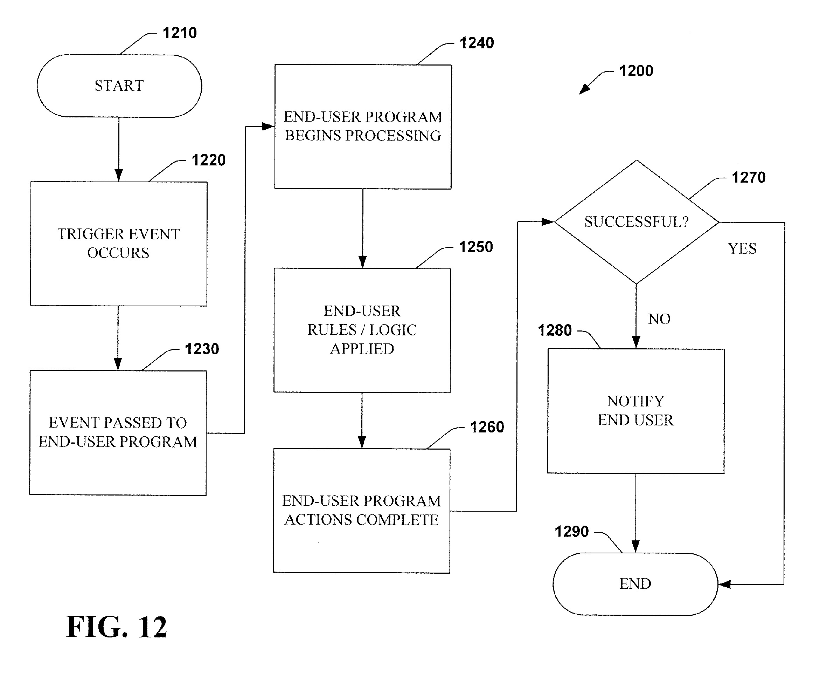

FIG. 12 is a flow diagram of a general processing flow 1200 that can be followed by an end-user program created using components or methods disclosed and described herein. Processing of the general processing flow 1200 begins at START block 1210 and continues to process block 1220 where a triggering event, such as arrival of an email message, occurs. At process block 1230, a system event that indicates that a triggering event has occurred is passed to an end-user program. The end-user program uses the system event to begin processing at process block 1240.

Processing continues at process block 1250 where the end-user program applies rules or logic included in the end-user program. At process block 1260, the end-user program completes its processing tasks in accordance with the system event received and its rules or logic. At decision block 1270, a determination is made whether the end-user program has successfully completed its tasks. If no, processing continues to process block 1280 where an error message is generated and the end user is notified of the error. Processing from process block 1280 concludes at END block 1290. Similarly, if the determination made at decision block 1270 is yes, processing concludes at END block 1290.

In order to provide additional context for implementation, FIGS. 12-13 and the following discussion is intended to provide a brief, general description of a suitable computing environment within which disclosed and described components and methods can be implemented. While various specific implementations have been described above in the general context of computer-executable instructions of a computer program that runs on a local computer and/or remote computer, those skilled in the art will recognize that other implementations are also possible either alone or in combination with other program modules. Generally, program modules include routines, programs, components, data structures, etc. that perform particular tasks and/or implement particular abstract data types.

Moreover, those skilled in the art will appreciate that the above-described components and methods may be practiced with other computer system configurations, including single-processor or multi-processor computer systems, minicomputers, mainframe computers, as well as personal computers, hand-held computing devices, microprocessor-based and/or programmable consumer electronics, and the like, each of which may operatively communicate with one or more associated devices. Certain illustrated aspects of the disclosed and described components and methods may also be practiced in distributed computing environments where certain tasks are performed by remote processing devices that are linked through a communications network or other data connection. However, some, if not all, of these aspects may be practiced on stand-alone computers. In a distributed computing environment, program modules may be located in local and/or remote memory storage devices.

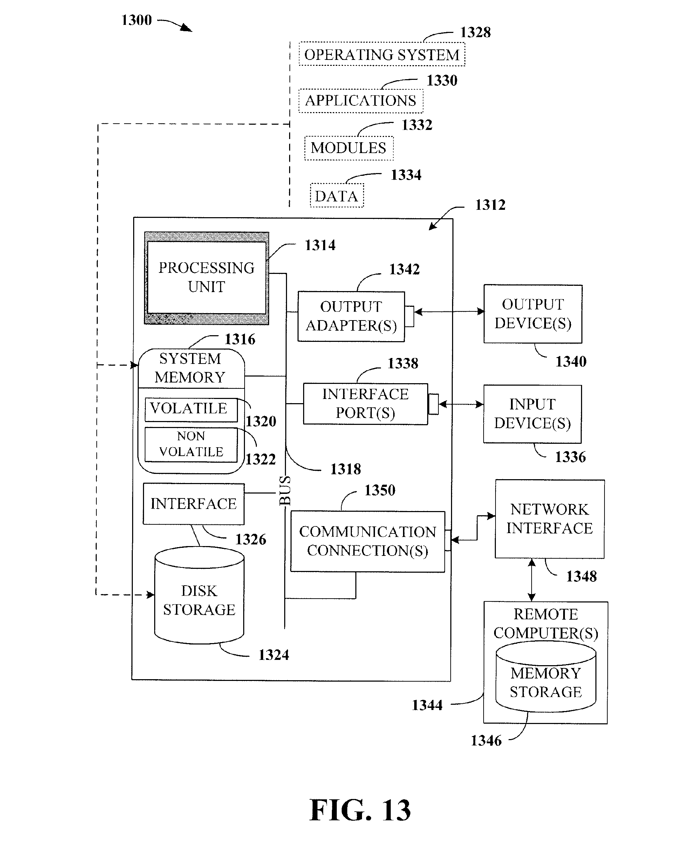

With reference to FIG. 13, an exemplary environment 1300 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/non-volatile computer storage media. For example, FIG. 13 illustrates a disk storage 1324. The disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that FIG. 13 describes software that acts as an intermediary between users and the basic computer resources described in the suitable operating environment 1300. Such software includes an operating system 1328. The operating system 1328, which can be stored on the disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the subject invention can be implemented with various operating systems or combinations of operating systems.

A user enters commands or information into the computer 1312 through input device(s) 1336. The input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 via interface port(s) 1338.
Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapter 1342 is provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected via communication connection 1350. Network interface 1348 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1248 includes, for exemplary purposes only, internal and external technologies such as, modems including regular telephone grade modems, cable modems and DSL modems, ISDN adapters, and Ethernet cards.

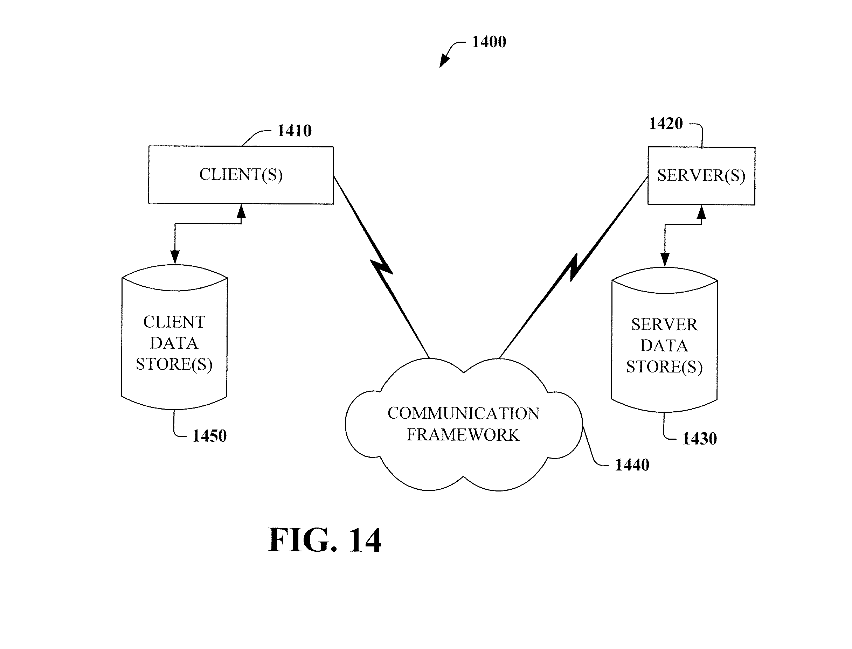

FIG. 14 is a schematic block diagram of a sample-computing environment 1400 within which the disclosed and described components and methods can be used. The system 1400 includes one or more client(s) 1410. The client(s) 1410 can be hardware and/or software (for example, threads, processes, computing devices). The system 1400 also includes one or more server(s) 1420. The server(s) 1420 can be hardware and/or software (for example, threads, processes, computing devices). The server(s) 1420 can house threads or processes to perform transformations by employing the disclosed and described components or methods, for example.

One possible means of communication between a client 1410 and a server 1420 can be in the form of a data packet adapted to be transmitted between two or more computer processes. The system 1400 includes a communication framework 1440 that can be employed to facilitate communications between the client(s) 1410 and the server(s) 1420. The client(s) 1410 are operably connected to one or more client data store(s) 1450 that can be employed to store information local to the client(s) 1410. Similarly, the server(s) 1420 are operably connected to one or more server data store(s) 1430 that can be employed to store information local to the server(s) 1340.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system for creating data processing tasks, comprising:
an end-user programming module that allows an end user to associate one or more end-user-defined actions to at least one available computing component; and
a rules platform that provides a binding of the one or more end-user-defined actions with the available computing component such that an integrated end-user program is created using the available computing component.

2. The system of claim 1, wherein the available computing component is an operating system.

3. The system of claim 1, wherein the available computing component is a monitor application.

4. The system of claim 1, wherein the available computing component is a user application.

5. A computer-readable medium comprising machine-interpretable data structures, the machine-interpretable data structures including the components of claim 1.

6. A data signal comprising machine-interpretable data, the machine-interpretable data including data structures that include the components of claim 1.

7. A method for creating data processing components, comprising:
specifying an end-user-defined action to be taken upon occurrence of an event;
identifying a first software component that is capable of performing the end-user-defined action; and
creating a second software component that uses the first software component to perform the end-user-defined action.

8. The method of claim 7, further comprising:
creating a graphical control within a preexisting software component, wherein the graphical control activates the second software component.

9. The method of claim 7, further comprising:
creating an icon for a graphical user interface, wherein the icon activates the second software component.

10. The method of claim 7, wherein identifying a first software component includes identifying a component of an operating system.

11. The method of claim 8, wherein identifying a first software component includes identifying a component of a monitor process.

12. The method of claim 9, wherein identifying a first software component includes identifying a component of a daemon process.

13. The method of claim 7, wherein identifying a first software component includes identifying a component of a user application.

14. A computer-readable medium comprising machine-interpretable data that can cause a computing device to perform the method of claim 13.

15. A data signal comprising machine-interpretable data capable of causing a computing device to perform the method of claim 13.

16. A system for creating data processing components, comprising:
means for specifying an end-user-defined action to be taken upon command event;
means for identifying a first software component that is capable of performing the specified end-user-defined action; and
means for creating a second software component that uses the first software component to perform the end-user-defined action.

17. The system of claim 16, further comprising:
means for creating a graphical control within a preexisting software component, wherein the graphical control activates the second software component.

18. The system of claim 16, further comprising:
means for creating an icon for a graphical user interface, wherein the icon activates the second software component.

19. The system of claim 16, further comprising means for monitoring user actions that can be collected to create an end-user-defined action.

20. The system of claim 19, further comprising means for creating a program module based upon the end-user-defined action.
